# EUROPÄISCHE PATENTSCHRIFT

(11) **EP 1 250 467 B1**
(45) Veröffentlichungstag und Bekanntmachung des Hinweises auf die Patenterteilung: **30.05.2007**
(21) Anmeldenummer: 00984971.2
(22) Anmeldetag: 06.11.2000
(51) Int. Cl.: C22C 11/00, C22C 13/00, C22C 18/00, C22C 21/00, C22C 23/00, B23K 1/06, B23K 1/08, B23K 3/06, B23K 3/08

(54) **LOTLEGIERUNG**
SOLDERING ALLOY
ALLIAGE A SOUDER

(30) Priorität: 08.11.1999 DE 19953670
(43) Veröffentlichungstag der Anmeldung: 23.10.2002
(73) Patentinhaber: Rass, Ino J., 52062 Aachen (DE)
(72) Erfinder: HILLEN, Frank, 41836 Hückelhoven (DE); RASS, Ino, 52062 Aachen (DE); LUGSCHEIDER, Erich, 52074 Aachen (DE)
(74) Vertreter: Wurm, Maria Bernadette
(86) Internationale Anmeldenummer: PCT/EP2000/010933
(87) Internationale Veröffentlichungsnummer: WO 2001/034860

(56) Entgegenhaltungen:
- WO-A-98/14299
- DE-A- 4 110 517
- DE-A- 19 526 822
- GB-A- 1 385 191
- US-A- 3 949 118
- US-A- 4 929 423
- PATENT ABSTRACTS OF JAPAN vol. 004, no. 057 (M-009), 26. April 1980 (1980-04-26) -& JP 55 024720 A (ASAHI GLASS CO LTD), 22. Februar 1980 (1980-02-22)
- PATENT ABSTRACTS OF JAPAN vol. 007, no. 001 (M-183), 6. Januar 1983 (1983-01-06) -& JP 57 160594 A (NIHON GENMA:KK), 2. Oktober 1982 (1982-10-02)
- PATENT ABSTRACTS OF JAPAN vol. 009, no. 138 (C-286), 13. Juni 1985 (1985-06-13) -& JP 60 024360 A (SUMITOMO DENKI KOGYO KK), 7. Februar 1985 (1985-02-07)
- PATENT ABSTRACTS OF JAPAN vol. 012, no. 061 (M-671), 24. Februar 1988 (1988-02-24) -& JP 62 207570 A (TAMURA SEISAKUSHO CO LTD), 11. September 1987 (1987-09-11)
- PATENT ABSTRACTS OF JAPAN vol. 005, no. 002 (M-049), 9. Januar 1981 (1981-01-09) -& JP 55 136562 A (HITACHI LTD), 24. Oktober 1980 (1980-10-24)

## Beschreibung

Die Erfindung bezieht sich auf eine Lotlegierung, die in einer sauerstoffhaltigen Umgebung eingesetzt werden kann.

Löten ist eine der am weitesten verbreiteten Fügetechniken. Im Hinblick auf eine Ausdehnung des Anwendungsbereichs für das Löten als Fügetechnik ergeben sich jedoch bisher noch einige schwerwiegende Nachteile.

Viele, der bisher bekannten Lotlegierungen können nur dann mit gutem Ergebnis verwendet werden, wenn die Oberflächen der zu verbindenden Bauteile vor dem Aufbringen der Lotlegierung gesäubert und gegebenenfalls von vorhandenen Oxidschichten befreit werden, um einen direkten Kontakt der Schmelze des üblicherweise metallischen Lotes mit den Bauteiloberflächen zu erreichen, wobei gleichzeitig mit dem Lot ein Flußmittel eingesetzt werden kann. Dies hat zur Folge, daß die zu verlötenden Bauteiloberflächen einer aufwendigen Vorbehandlung bedürfen und daß der Lötvorgang bei Einsatz eines Flußmittelszusatzes komplizierter auszuführen ist. Des weiteren besteht insbesondere bei großflächigen Bauteilen die Gefahr, daß Poren bzw. Flußmittelrückstände in der Lötnaht eingeschlossen werden, wodurch der Wärmeübergang bzw. die mechanische Festigkeit der Verbindung herabgesetzt werden. Ferner besteht die Gefahr, daß nach dem Lötvorgang Flußmittelrückstände an dem verlöteten Bauteilen verbleiben, die zu Problemen, wie beispielsweise Korrosion, optische Degradierung, führen oder Schwierigkeiten bei der weiteren Verarbeitung hervorrufen. Die Flußmittelrückstände können auch die Langzeithaltbarkeit der Lötverbindungen beeinträchtigen. Darüber hinaus sind einige verwendete Flußmittel gesundheitsschädlich und/oder ökologisch bedenklich.

Bekannte handelsübliche Weichlotlegierungen aus Zinn und/oder Blei und gegebenenfalls Silber, Kupfer oder Antimon, die bei 200°C verarbeitbar sind, haben den Nachteil, daß sie zusätzlich häufig Kadmium enthalten, das sehr gesundheitsschädlich und ökologisch bedenklich ist. Darüber hinaus haben Weichlote aus solchen Weichlotlegierungen den Nachteil, daß sie viele Werkstoffe nicht oder nur sehr schlecht benetzen und ihr Einsatz zur Verbindung von Bauteilen, die Oberflächen aus sehr schlecht nicht benetzbaren Werkstoffen aufweisen, nicht möglich ist. Es ist mit derartigen Weichloten beispielsweise nicht möglich, Bauteile aus Keramik- oder Glaswerkstoffen zu verlöten, da diese Oberflächen nicht benetzt werden.

Diesen Nachteil im Bereich der Bauteile aus Keramik- oder Glaswerkstoffen hat man bereits dadurch versucht zu überwinden, daß den Weichloten Titan zugesetzt wird. Diese sogenannten Weichaktivlote mit einem Titananteil als sogenanntem Aktivmetall zeigen eine wesentlich verbesserte Benetzung auch von an sich schlecht benetzbaren Oberflächen, wie sie bei Keramiken oder Gläsern vorliegen. Ein erheblicher Nachteil dieser Weichaktivlote besteht allerdings darin, daß sie Verarbeitungstemperaturen von 600 bis 900°C benötigen und nur im Hochvakuum oder in reinem Schutzgas verarbeitet werden können. Durch Notwendigkeit der Verarbeitung unter Vakuum wird das Lötverfahren sehr aufwendig und scheidet in vielen Fällen die Anwendung dieser Weichaktivlote aus. Darüber hinaus schränkt die hohe Verarbeitungstemperatur die Auswahl an lötbaren Werkstoffen stark ein.

Bekannte handelsübliche Hartlote bestehen überwiegend aus Silber und/oder Kupfer. Die Hartaktivlote enthalten Titan als aktive Komponente. Die Einschränkungen bezüglich werkstoffseitiger Einsetzbarkeit und gesundheitlicher sowie ökologischer Bedenklichkeit gelten bei den Hartaktivloten in ähnlicher Weise, wie bei den oben genannten Weich- und Weichaktivloten.

Aus der DE 195 26 822 A1 und der DE 197 29 545 sind Lotlegierungen bekannt, die sich dadurch auszeichnen, daß sie in einer sauerstoffhaltigen Atmosphäre über einen breiten Verarbeitungstemperaturbereich eingesetzt werden können. Die dort beschriebenen Lotlegierungen haben jedoch den Nachteil, daß die bei ihnen erreichbaren Festigkeitswerte eingeschränkt sind. Auch ist die Weiterverarbeitung oder Formgebung des Lotlegierungsmaterials, beispielsweise zu Drähten oder Folien, schwierig. Weiterhin tritt bei den Lotlegierungen während der Verarbeitung auf einigen Grundwerkstoffen, wie beispielsweise CrNi-Stählen eine übermäßige Oxidation der Lotlegierung auf.

Ausgehend hiervon liegt der Erfindung die Aufgabe zugrunde, eine Lotlegierung zu schaffen, die in sauerstoffhaltiger Atmosphäre einsetzbar ist und eine solche Verarbeitungstemperatur und Zusammensetzung hat, daß der Anwendungsbereich der Lotlegierung gegenüber bekannten Lotlegierungen deutlich erweitert ist.

Hinsichtlich der Lotlegierung ist zur Lösung der Aufgabe eine Lotlegierung vorgesehen, bestehend aus
- einem Element oder einem Gemisch aus Elementen, ausgewählt aus der Gruppe, die Kupfer, Silber und Antimon umfaßt, in einer Gesamtmenge von 0,1 bis 40 Gew.-% als erste Komponente,
- einem Element oder einem Gemisch aus Elementen, ausgewählt aus der Gruppe, die die seltenen Erden umfaßt, in einer Gesamtmenge von 0,01 bis 20 Gew.-% als zweite Komponente,
- dem Element Gallium in einer Gesamtmenge von 0 bis 10 Gew.-% als dritte Komponente,
- einem Element oder einem Gemisch aus Elementen, ausgewählt aus der Gruppe, die Eisen, Nickel, Kobalt, Mangan und Chrom umfaßt, in einer Gesamtmenge von 0 bis 5 Gew.-% als vierte Komponente,
- einem Element oder einem Gemisch aus Elementen, ausgewählt aus der Gruppe, die Titan, zirkon, Hafnium, Vanadium, Niob und Tantal umfaßt, in einer Gesamtmenge von 0 bis o,9 Gew.-% als fünfte Komponente,
- einer Verstärkungs-Komponente, ausgewählt aus der Gruppe, die Aluminiumoxid, Aluminiumnitrid, Siliziumnitrid, Siliziumkarbid, Titankarbid und Graphit umfaßt, in einer Gesamtmenge von 0 bis 40 vol.-% als sechste Komponente,
- einem Element oder einem Gemisch aus Elementen, ausgewählt aus der Gruppe, die Aluminium, Magnesium und Zink umfaßt, als Rest und
- üblichen Verunreinigungen.

Die vorgeschlagene Lotlegierung besteht somit aus mindenstens drei Komponenten, nämlich der ersten Komponente aus einem Element oder einem Gemisch aus Elementen, ausgewählt aus der Gruppe, die Kupfer, Silber und Antimon umfasst, der zweiten Komponente aus einem Element oder einem Gemisch aus Elementen, ausgewählt aus der Gruppe, die seltenen Erden umfasst, und der Rest-Komponente, die aus einem Element oder einem Gemisch aus Elementen, ausgewählt aus der Gruppe, die Aluminium, Magnesium und Zink umfasst, besteht. Die übrigen, genannten Komponenten sind lediglich wahlweise vorgesehen und sind für bestimmte Anwendungsfälle von Bedeutung, wie später erläutert wird.

Durch die erste Komponente, die aus Silber, Kupfer oder Antimon oder aus einem Gemisch dieser Elemente besteht, wird der Schmelzbereich der Lotlegierung genau festgelegt. Darüber hinaus haben die einzelnen Elemente folgende spezifische Funktion:
- Ein Zusatz von Silber bewirkt die Reduzierung der Oberflächenspannung der Lotlegierung im geschmolzenen Zustand, eine Herabsetzung der Löttemperatur sowie eine Steigerung der Festigkeit der fertigen Lotverbindung.
- Ein Zusatz von Kupfer dient zur Erhöhung der Schmelztemperatur und zur Verbesserung des Benetzungsverhaltens der Lotlegierung auf eisenhaltigen Werkstoffen sowie auf Keramiken und Gläsern.
- Ein Zusatz von Antimon dient zur Erhöhung der Schmelztemperatur der Lotlegierung und zur Steigerung der Festigkeit der gelöteten Verbindung zwischen zwei Bauteilen.

Zu den Elementen der zweiten Komponente gehören Cer, Yttrium, Scandium, Lanthan, Prasiodym, Neodym, von denen Cer oder ein Cer-Mischmetall bevorzugt wird. Typische Cer-Mischmetalle bestehen aus 86,8 Gew.-% Cer, 3,0 Gew.-% Lanthan, 4,0 Gew.-% Neodym, 6,2 Gew.-% Samarium und Praseodym.

Durch die zweite Komponente verbindet sich aufgrund der hohen Sauerstoff-Affinität das Element oder Gemisch aus Elementen der Gruppe der seltenen Erden, vorzugsweise Cer, mit dem Luftsauerstoff und bildet Oxide, die sich mit den Oberflächen von Metalloxiden, Keramik und Glas physikalisch verbinden. Durch die Oxidteilchen, die zunächst als Kristallisationskeime wirken und im Verlaufe der Erstarrung der Lotlegierung Kornwachstumsbarrieren bilden, wird ein feines Gefüge der erstarrten Lotlegierung mit verbesserten Festigkeitswerten bewirkt. Darüber hinaus wird die Formbarkeit des Lotmaterials verbessert, so daß aus dem Lotmaterial Drähte und Folien in im Vergleich zum Stand der Technik geringerem Durchmessern und Dicken hergestellt werden können.

Die wahlweise in der Lotlegierung enthaltene Dritte Komponente, Gallium, bewirkt eine verbesserte Entfernung von Oxidschichten, fördert das Benetzungsverhalten der Lotlegierung auf metallischen Werkstoffen und senkt bei höheren Gehalten die Schmelztemperatur der Lotlegierung ab. Die ebenfalls wahlweise zugesetzten Elemente der vierten Komponente der Lotlegierung haben folgende Bedeutung: Die Elemente Nickel, Mangan und Chrom werden insbesondere den höherschmelzenden Lotlegierungen mit Solidustemperaturen größer als 370°C zugesetzt. Diese Zusätze verbessern die Verarbeitbarkeit der Lotlegierungen, da die Oxidation, insbesondere auf eisenhaltigen Bauteil-Legierungen, gemindert wird. Geringe Eisen- und Kobaltzusätze bewirken eine Kornfeinung und somit eine Festigkeitssteigerung der Lötverbindung zwischen zwei Bauteilen.

Die auch wahlweise zugesetzten Elemente der fünften Komponente, die Elemente Titan, Zirkon, Hafnium, Vanadium, Niob und Tantal umfasst, tragen in geringen Mengen zur Festigkeitssteigerung einer Lotverbindung bei. Durch den Zusatz von Niob und/oder Tantal können insbesondere Festigkeitssteigerungen beim Löten von Aluminium- und Aluminiumlegierungsbauteilen erzielt werden.

Die sechste Komponente der Lotlegierung, die Verstärkungskomponente, nämlich Aluminiumoxid, Aluminiumnitrid, Siliciumnitrid, Siliciumkarbid, Titankarbid und Graphit wird ebenfalls wahlweise zugesetzt. Sie kommt zum Einsatz, wenn zwei miteinander zu verbindende Bauteile sich in ihrem thermischen Ausdehnungskoeffizienten deutlich unterscheiden, wie beispielsweise Metall und Keramik oder Metall und Glas. Durch den Unterschied in thermischen Ausdehnungskoeffizienten der zu verbindenden Bauteile können nach dem Lötvorgang Restspannungen verbleiben, die, insbesondere wenn die Bauteile einer thermischen Wechselbelastung ausgesetzt werden, zum Bruch eines der Bauteile, beispielsweise Keramik oder Glas, führen kann. Durch die Zugabe der nicht-metallischen verstärkungskomponenten der sechsten Komponente der Lotlegierung wird der Ausdehnungskoeffizient der Lotlegierung abgesenkt und kann somit dem Fügepartner-Bauteil mit dem niedrigeren thermischen Ausdehnungskoeffizienten angepasst werden. Wenn eine hohe thermische Leitfähigkeit der Lötverbindung gewünscht wird, sind als sechste Komponente Aluminiumnitrid, Siliciumcarbid oder Graphit einzusetzen.

Die Restkomponente aus Aluminium, Magnesium und Zink oder aus einem Gemisch dieser Elemente ist die jeweilige Lotbasis der Lotlegierung. Durch die Wahl der einzelnen Elemente aus der Gruppe der Elemente, die die Rest-Komponente bilden können, wird der Schmelzbereich der Lotlegierung und damit die Löttemperatur maßgeblich beeinflußt. Die Elemente Aluminium, Magnesium und Zink oder Gemische aus diesen drei Elementen sind Lotbasen für Legierungen mit Solidustemperaturen größer 350°C. Gegenüber den reinen Zinkbasislegierungen haben die aluminiumhaltigen Lotlegierungssysteme den Vorteil, daß die starke Erosionswirkung beim Löten von Aluminiumbauteilen unterdrückt wird.

Die Liquidustemperatur der erfindungsgemäßen Lotlegierung liegt - je nach Zusammensetzung der Lotlegierung - unter oder über 450 °C. Die Verarbeitungstemperatur der Lotlegierung beträgt bevorzugt höchstens 550°C. Im Unterschied zu den bekannten sogenannten Weich- und Hartaktivloten liegen die Verarbeitungstemperaturen der erfindungsgemäßen Lotlegierung somit deutlich niedriger. Weiterhin hat die Lotlegierung den Vorteil, daß für deren Einsatz ein Vakuum oder eine Schutzgasatmosphäre beim Löten nicht erforderlich ist.

Mit der Lotlegierung kann eine Vielzahl metallischer und nicht metallischer Werkstoffe, auch oxidische und nicht oxidische Keramiken sowie Gläser, mit sich selbst oder mit anderen Werkstoffen gefügt werden.

Schwerpunktmäßige Anwendungen der Lotlegierung ergeben sich für folgende Werkstoffkombinationen:
- Aluminium - Aluminium
- Aluminium - Stahl
- Kupfer - Kupfer
- Kupfer - Aluminium
- Kupfer - Aluminiumnitrid oder Aluminiumoxid oder Glas.

Erfindungsgemäße Legierungen können insbesondere für das Fügen poröser Werkstoffe eingesetzt werden. Beispiele für poröse Werkstoffe sind Sintermetalle oder Metallschäume wie Aluminiumschäume. vorteilhaft gegenüber bekannten Lotlegierungsmaterialien ist es, daß weder Lotmaterial noch Flußmittel die Poren des Werkstoffs infiltrieren. Die vergleichsweise niedrigen Fügetemperaturen der erfindungsgemäßen Legierungen verhindern ein Anschmelzen der feinen Porenwandungen, wie dies z.B. beim Schweißen geschehen kann.

Die Legierungen können in verschiedenen Darstellungsformen hergestellt werden, beispielsweise als Drähte, Stäbe, Bleche, Granulate, Pulver, Pasten, Folien oder Formteile. Bei Einsatz der Verstärkungskomponenten, wie Aluminiumoxid, Aluminiumnitrid, Siliziumnitrid, Siliziumkarbid, Titankarbid oder Graphit ergibt sich eine Richtungsabhängigkeit der Eigenschaften. Es ist möglich, die Verstärkungskomponenten auf drei Arten in die Lotmatrix einzubringen:
- als unidirektional ausgerichtete Fasermaterialien,
- als bidirektionale Faserschichten bzw. Fasergewebe oder Netze, oder
- als Partikel bzw. dreidimensionales Fasergewebe.

Die Verarbeitung der Lote aus den Lotlegierungsmaterialien besteht grundsätzlich aus den Verfahrensschritten der Lotapplikation und des Lötens. Bei der Lotapplikation werden drei grundsätzliche Varianten unterschieden, nämlich
- Einlegen von Folie/Band/Draht in Form von Formteilen,
- Beschichten der Bauteile mit Dünnschichtverfahren wie PVD oder CVD (Schichtdicke zwischen 1 - 15 µm im Bereich der Elektronik) oder Dickschichtverfahren, wie atmosphärisches Plasmaspritzen, Flammspritzen oder Lichtbogenspritzen (Schichtdicken zwischen 50 und 300 µm) oder
- Vorbeloten der zu fügenden Bauteile, wobei die einzelnen Bauteile auf Arbeitstemperatur gebracht und das Lotlegierungsmaterial auf die vorzubelotende Fläche des Bauteils, beispielsweise mit einer Band- oder Drahtvorschubeinheit, gebracht wird.

Für das Anwendungsgebiet der Lotlegierung des Fügens von Stahl- mit Aluminium-Bauteilen wird für eine Löttemperatur im Bereich von 460°C - 500°C eine Lotlegierung bevorzugt, bei der
- die erste Komponente in Form von 15 bis 25 Gew.-% Kupfer,
- die zweite Komponente in Form von 0,05 bis 0,15 Gew.-% Cer,
- die dritte Komponente in Form von 0,05 bis 0,15 Gew.-% Gallium, und
- der Rest in Form von Magnesium, Aluminium oder eines Gemisches aus Magnesium und Aluminium vorliegt. Bevorzugt liegt der Gehalt an Magnesium in dem Bereich von 7 bis 23 Gew.-%.

Zum Fügen von Aluminium-Bauteilen mit Stahl-Bauteilen im Löttemperaturbereich von 420 - 450°C wird eine Lotlegierung bevorzugt, bei der
- die erste Komponente in Form von 5 bis 7 Gew.-% Silber, 0 bis 7 Gew.-% Antimon und 1 bis 7 Gew.-% Kupfer
- die zweite Komponente in Form von 0,05 bis 0,15 Gew.-% Cer,
- die dritte Komponente in Form von 0,05 bis 0,15 Gew.-% Gallium, und
- der Rest in Form von Aluminium, Zink oder eines Gemisches aus Aluminium und Zink vorliegt. Bevorzugt liegt der Gehalt von Aluminium in dem Bereich von 5 bis 10 Gew.-%.

Zum Löten von Aluminium- mit Stahl-Bauteilen bei einer Löttemperatur von 500°C kann auch vorteilhafter Weise eine Lotlegierung eingesetzt werden, bei der
- die erste Komponente in Form von 25 bis 35 Gew.-% Kupfer,
- die zweite Komponente in Form von 0,8 bis 1,6 Gew.-% Cer,
- die dritte Komponente in Form von 0,05 bis 0,15 Gew.-% Gallium, und
- der Rest in Form von Aluminium, Magnesium oder eines Gemisches aus Aluminium und Magnesium vorliegt. Bevorzugt liegt der Gehalt an Aluminium bei 8 bis 12 Gew.-%.

Zum Fügen von Metallen mit nicht-metallischen Bauteilen aus Keramik oder Glas kann bevorzugt eine Lotlegierung eingesetzt werden, bei der
- die erste Komponente in Form von 0 bis 1,5 Gew.-% Kupfer, 1,5 bis 4,5 Gew.-% Silber und 0 bis 2,5 Gew.-% Antimon,
- die zweite Komponente in Form von 0,05 bis 4,5 Gew.-% Cer,
- die dritte Komponente in Form von 0,05 bis 0,15 Gew.-% Gallium,
- die fünfte Komponente in Form von 0 bis 0,5 Gew.-% Nickel und 0 bis 0,5 Gew.-% Titan, und
- der Rest in Form von 0 bis 5 Gew.-% Zink vorliegt. Bevorzugt liegt der Gehalt an Zink im Bereich von 0 bis 5 Gew.-%.

Bevorzugt liegt die Rest-Komponente in einem Anteil von mindestens 50 Gew.-% vor, während die Verstärkungskomponente in einem Anteil von 1 bis 30 Vol.-% enthalten sein kann, sofern die oben angesprochenen Schwierigkeiten hinsichtlich verschiedener Ausdehnungskoeffizienten von zwei miteinander zu fügenden Bauteilen vorliegen.

Die oben beschriebene Lotlegierung kann grundsätzlich bei ihrem Einsatz in einer sauerstoffhaltigen Atmosphäre durch Flußmittel verarbeitet werden. Diese Flußmittel verhindern die Bildung einer Oxidhaut um die Schmelze des Lotlegierungsmaterials herum. Mit bekannten Verfahren wird die Oxidhaut der Schmelze vorteilhafterweise ohne Flußmittel aufgebrochen, und zwar durch mechanische Einwirkung auf die Oxidhaut. Der Einsatz von Flußmitteln wird überflüssig.

Bevorzugt erfolgt das Aufbrechen der Oxidhaut der Schmelze durch Beaufschlagung der Schmelze mit Ultraschallschwingungen.

Auch bei Verfahren zum Fügen von zwei Bauteilen kann das Aufbrechen der Oxidhaut durch Beaufschlagung der Schmelze mit Ultraschallschwingungen erfolgen. Es ist jedoch ebenfalls möglich, daß das Aufbrechen der Oxidhaut der Schmelze durch eine gegenseitige Relativbewegung der Bauteile unter Zwischenlage der Schmelze herbeigeführt wird. Beispielweise können zwei zylindersymmetrische Bauteile mit sich gegenüberliegenden Flächen, zwischen denen sich die Schmelze der Lotlegierung befindet, relativ zueinander eine Drehbewegung durchführen. Bei rechtwinkligen Bauteilen können diese parallel zum Fügespalt relativ zueinander linear hin- und herbewegt werden, und zwar in einer periodischen Bewegung.

Zum Applizieren eines in Drahtform vorliegenden oxidierbaren Lotlegierungsmaterials auf wenigstens einen Teil der Oberfläche eines rohrförmigen Bauteils in einer sauerstoffhaltigen Atmosphäre wird bevorzugt eine Vorrichtung eingesetzt, mit
- einer um eine Achse drehbaren Aufnahme für das auf der Achse anzuordnende und zu verlötende Bauteil,
- einem Drehantrieb für die Aufnahme,
- einer parallel zu der Achse lageverstellbaren Zuführvorrichtung für das drahtförmige Lotlegierungsmaterial, die eine angetriebene Wickelspule mit dem drahtförmigen Lotlegierungsmaterial und ein Zuführelement aufweist, wobei das Zuführelement derart angeordnet ist, daß das drahtförmige Lotlegierungsmaterial zu der Oberfläche des rohrförmigen Bauteils geführt wird,
- einer Heizvorrichtung, die zum Aufheizen der Oberfläche des rohrförmigen Bauteils ausgebildet und angeordnet ist, und
- einem Werkzeug, das zum Reiben auf das auf die Oberfläche des rohrförmigen Bauteils aufgebrachte Lotlegierungsmaterial angeordnet ist.

Mit einer solchen Vorrichtung kann sowohl an der Außen- als auch an der Innenseite eines rohrförmigen Bauteils eine Vorbelotung vorgenommen werden, denn das Zuführelement, das ebenfalls rohrförmig ausgebildet sein kann, kann aufgrund der parallel zu der Achsenlage verstellbaren Zuführvorrichtung sowohl außen an dem rohrförmigen Bauteil als auch, jedenfalls über einen ausreichend groß bemessenen Randabschnitt, innen parallel zu der Achse verstellt werden, wobei kontinuierlich Lotmaterial auf die jeweilige Oberfläche aufgebracht wird.

Das Aufbrechen der Oxidschicht der Schmelze des Lotlegierungsmaterials erfolgt mit dem auf die jeweilige, mit Lotlegierungsmaterial zu versehene Oberfläche einwirkenden Werkzeug, dessen Ausrichtung angepasst werden kann. Durch Drükken des Werkzeuges auf die betreffende Oberfläche wird die Oxidhaut aufgebrochen.

Wenn diese eben beschriebene Vorrichtung zum Fügen von zwei rohrförmigen Bauteilen oder einem zylinderförmigen und einem rohrförmigen Bauteil eingesetzt werden soll, kann sie um eine weitere Aufnahme zum Halten des zweiten Bauteils ergänzt werden, während das Werkzeug fortfallen kann, sofern eines der rohrförmigen Bauteile relativ zu dem anderen Bauteil eine Drehbewegung um seine Längsachse, die auch die Verbindungsachse der rohrförmigen Bauteile ist, ausführt.

Allgemein kann gemäß der Erfindung zum Fügen von zwei Bauteilen mit einem oxidierbaren Lotlegierungsmaterial durch Löten in einer sauerstoffhaltigen Atmosphäre eine Vorrichtung eingesetzt werden, mit
- einer Aufnahmevorrichtung mit zwei Aufnahmeelementen zum Positionieren jeweils eines Bauteiles während eines Lötvorgangs, wobei die Aufnahmeelemente zur Ausbildung eines Zwischenraums zwischen den Bauteilen in einem Abstand angeordnet sind, der zum Einbringen des Lotlegierungsmaterials zwischen den Bauteilen angepaßt ist,
- einer Heizvorrichtung zum Aufheizen wenigstens der dem Zwischenraum zugeordneten Abschnitte der Bauteile und
- einer Einrichtung zum Aufbrechen einer Oxidschicht, die sich beim Schmelzen des Lotlegierungsmaterials um die Schmelze herum bildet.

Die Einrichtung zum Aufbrechen der Oxidschicht kann von einer Ultraschallquelle gebildet werden, die zum Einleiten von Ultraschallwellen in den Zwischenraum, insbesondere zu den Grenzflächen Bauteil-Lot, angeordnet ist. Bei im wesentlichen parallel zueinander verlaufenden zu verbindenden Oberflächen der Bauteile können die Ultraschallwellen vertikal oder horizontal zu dem Zwischenraum eingeleitet werden.

Alternativ dazu kann die Einrichtung zum Aufbrechen der Oxidschicht von einer Drehantriebsvorrichtung an deren Welle eines der Aufnahmeelemente angebracht ist, und einer Vorspanneinrichtung, die ein Aufnahmeelement in Richtung auf das andere Aufnahmeelement vorspannt, gebildet werden. Diese Ausbildung bewirkt eine relative Drehbewegung des einen Bauteils gegenüber dem anderen sowie eine Druckbeaufschlagung des Lotmaterials beim Löten und ist für zylindersymmetrische Bauteile aus Vollmaterial gut geeignet.

Die Einrichtung zum Aufbrechen der Oxidschicht kann auch von einer Schwingungseinrichtung zum Parallelverschieben der Aufnahmeelemente zueinander und einer Vorspanneinrichtung, die ein Aufnahmeelement in Richtung auf das andere Aufnahmeelement vorspannt, gebildet werden. Diese Ausbildung ist besonders für im Querschnitt rechtwinklige Bauteile geeignet.

Eines der Aufnahmeelemente ist unabhängig davon, ob die Einrichtung zum Aufbrechen der Oxidschicht eine Drehantriebsvorrichtung oder eine Schwingungseinrichtung aufweist, in Richtung auf das andere Aufnahmeelement vorgespannt. Dies bewirkt günstigere Verhältnisse für das Aufbrechen der Oxidschicht der Schmelze.

Die Erfindung wird nachfolgend anhand von Ausführungsbeispielen noch näher erläutert. Es zeigen:
- Fig. 1: eine vorrichtung zum Vorbeloten von Bauteilen in einem Lotbad;
- Fig. 2: eine Vorrichtung zum Vorbeloten von Bauteilen, bei der schmelzflüssiges Lot mittels Bürsten auf vorzubelotende Bauteile aufgebracht wird;
- Fig. 3: eine Vorrichtung zum Fügen von zwei Bauteilen, die eine Ultraschallquelle aufweist;
- Fig. 4: eine Vorrichtung zum Fügen von zwei Bauteilen, die eine Ultraschallquelle aufweist, die im Vergleich zu der Vorrichtung von Fig. 3 modifiziert angeordnet ist;
- Fig. 5: eine Vorrichtung zum Vorbeloten von rohrförmigen oder zylindrischen Bauteilen an deren Außenseite;
- Fig. 6: eine Vorrichtung zum Vorbeloten von rohrförmigen Bauteilen an deren Innenseite;
- Fig. 7: eine Vorrichtung zum Fügen von rohrförmigen Bauteilen;
- Fig. 8: eine Vorrichtung zum Fügen von zylindersymmetrischen Bauteilen; und
- Fig. 9: eine Vorrichtung zum Fügen von rechtwinkligen Bauteilen.

Vor der Erläuterung der Vorrichtungen werden zunächst Beispiele für die Lotlegierung angegeben, die mittels der Vorrichtungen zum Applizieren der Lotlegierung auf Bauteile oder zum Fügen von zwei Bauteilen eingesetzt werden können.

### Beispiel 1

Das Lotlegierungsmaterial aus 4 Gew.-% Silber, 0,1 Gew.-% Cer, 0,1 Gew.-% Gallium, 0,9 Gew.-% Titan, Rest Zinn, kann zum Fügen einer Vielzahl metallischer und nicht-metallischer Werkstoffe, auch von oxidischen und nicht oxidischen Keramiken sowie Gläsern mit sich selbst oder mit anderen Werkstoffen eingesetzt werden. Die am Ende der Figuren angefügte Tabelle 1 gibt eine Übersicht über die mit dieser Legierung, aber auch mit anderen erfindungsgemäßen Legierungen lötbaren Werkstoffpaarungen. Die Löttemperatur liegt bei 250°C.

Die Lotlegierung kann beispielsweise im Wärmetauscher- und Kühlerbau vorteilhaft eingesetzt werden. Es können Aluminiumrohre mit Rohren aus Aluminium oder Kupfer (sogenannte Fittings) gefügt werden. Auch Fins aus Aluminium können mit Aluminiumplatten oder Stahlrohren verbunden werden.

Formenwerkzeuge zur Formgebung von Polymeren oder polymerhaltigen Kompositwerkstoffen bestehen aus Formschalen aus Nickel oder Stahl und einer Verrohrung aus Kupfer oder Aluminium. Neben einer mechanischen Befestigung der Rohre der Verrohrung auf einer Formenschale werden die Rohre zu Verbesserung des Wärmeübergangs stoffschlüssig mit dem Lot aus der Lotlegierung verbunden.

Sogenannte Targets, die in der PVD-Technologie eingesetzt werden, bestehen aus einer Kupferplatte, die mit dem jeweiligen Targetwerkstoff verbunden werden muß. Als Targetwerkstoffe werden beispielsweise Chrom, Aluminiumoxid, Siliciumnitrid, Titandiborid und Titan eingesetzt. Da sich das Kupfer als Material einer Grundplatte einerseits und die jeweiligen Targetwerkstoffe andererseits stark in ihrem thermischen Ausdehnungskoeffizienten unterscheiden, können zum Fügen des Targetwerkstoffes mit der Kupferplatte folgende Vorgehensweisen eingesetzt werden:
- Der Targetwerkstoff wird mit einer Kupferschicht der Dicke 100 bis 300 µm, beispielsweise mittels thermischen Spritzens (APS)-beschichtet und in einem nachfolgenden Arbeitsgang mit dem Lot auf die Kupferplatte gelötet. Die Beschichtung des Targetwerkstoffes zu einer Minimierung von Restspannungen in der Lötnaht mit einer Kupferschicht ist aus löttechnischer Hinsicht nicht zwingend erforderlich. Sie wird insbesondere dann zum Einsatz kommen, wenn zur Erzielung hoher Abscheideraten im PVD-Prozeß mit hohen Leistungen gearbeitet wird.
- Alternativ wird dem Lot eine Verstärkungskomponente, wie Aluminiumoxid oder Graphit zugesetzt, und zwar, bezogen auf das Lot mit zugesetzter Verstärkungskomponente, in einem Volumenanteil von 5 - 30 % mit diesem modifizierten Lot können Targetwerkstoffe, wie Chrom, Aluminiumoxid, Siliciumnitrid, Titandiborid und Titan, unmittelbar mit der Kupferplatte verbunden werden.

Mit dem Lot können auch Druckmessmembranen, die aus Kupfer-Berillium-Legierungen bestehen, die mit einer Messingscheibe zu verbinden sind, gelötet werden.

Magnetische Werkstoffe wie Hartferrite, Magneten aus seltenen Erden, beispielsweise SmₓCo_{y}, oder Magnetwerkstoffe des Systems AlNiCo weisen teilweise niedrige Curie-Temperaturen auf, die beim Fügen nicht überschritten werden dürfen. Diese magnetischen Werkstoffe können mit dem Lot auf Trägermaterialien, wie beispielsweise Stahl, verzinkt oder unverzinkt, oder Messing gelötet werden.

Leiterplatten, die aus beidseitig kupferkaschierten Aluminiumnitridfolien bestehen, können mit dem Lot auf Kühlkörper aufgelötet werden. Diese Kühlkörper bestehen üblicherweise aus Aluminium, Kupfer oder MMC (metal matrix composits) oder CMC (ceramic matrix composits). Zur Anpassung der thermischen Ausdehnungskoeffizienten wird dem Lot eine Verstärkungskomponente in einer Menge von 5 bis 30 Vol.-% zugesetzt, wobei vorteilhafter Weise Aluminiumnitrid oder Graphit als Modifikator eingesetzt wird. Auch bei zugesetzter Verstärkungskomponente liegen die Löttemperaturen bei 250°C. Dieselbe Lotlegierungs-Verstärkungskomponenten-Zusammensetzung kann zum Verlöten von Leiterplatten mit Aluminiumnitridfolien verwendet werden.

### Beispiel 2

Mit einem Lot aus dem Lotlegierungsmaterial, das aus vier Gew.-% Silber, 0,1 Gew.-% Cer, 0,1 Gew.-% Gallium, 0 bis 0,9 Gew.-% Titan, Rest Zinn besteht kann Silicium für beispielsweise integrierte Schaltkreise oder für Sensoren verlötet werden. Diese Lote ermöglichen es auch, Kupfer oder Aluminium auf ein Siliciumwerkstück, beispielsweise ein Halbleiter-Waver, zu löten. Außerdem können Metalle mit Glas oder Keramik mit diesen Loten verbunden werden.

Die Lote kommen auch in der Mikrowellentechnik, bei der Kurzschlußschieber eingesetzt werden, zur Anwendung. Ein Bestandteil dieser Kurzschlußschieber sind Hohlleiterrohre, die einen viereckigen Querschnitt besitzen. Diese Hohlleiterrohre werden mit einem Flansch verlötet. Die Hohlleiterrohre und der Flansch bestehen aus Aluminium, Messing oder rostfreiem Stahl.

### Beispiel 3

Ein Lot aus der Legierung, die aus 6 Gew.-% Silber, 1 Gew.-% Kupfer, 0,1 Gew.-% Cer, 0,1 Gew.-% Gallium, 5,9 Gew.-% Aluminium und 87,9 Gew.-% Zink besteht, kann beim Löten von Heizpatronenhülsen eingesetzt werden, und zwar zur Verbesserung des Wärmeübergangs. Die Heizpatronen, die aus CrNi-Stahl, beispielsweise 1.4301, bestehen, werden in Trägerkörper aus Aluminium, Kupfer oder Stahl gelötet.

Ein weiteres Einsatzgebiet des Lotes betrifft elektromagnetische Steuerungselemente. Diese bestehen aus Werkstoffen wie Reineisen, Eisen-Silicium-Legierungen oder Feriten, wie FeZnMn, FeZnNi, FeZnLi. Zur Reduzierung von Wirbelstromverlusten, die in Wärme umgesetzt werden, werden die Werkstoffe der elektromagnetischen Steuerungselemente segmentiert und mit keramischen Werkstoffen, wie Aluminiumoxid und Aluminiumnitrid, beschichtet. Die einzelnen Segmente werden unmittelbar oder nach dem Aufbringen einer metallischen Decklage, beispielsweise aus Kupfer, Eisen oder Nickel, auf die Keramikschicht zum Herstellen des Bauteils gelötet.

Das Lot kann auch zum Fügen von Edelstahltöpfen mit Aluminium-Kompensböden oder bei der Herstellung von Induktionskochgeschirr, das aus Aluminiumgefäßen mit Edelstahlbodenplatten besteht, eingesetzt werden.

Die Löttemperatur der Legierung dieses Beispiels liegt bei 420°C.

### Beispiele 4, 5, 6, 7, 8

Für das anhand von Beispiel 3 erläuterte Anwendungsgebiet können auch die folgenden Lotlegierungen vorteilhaft eingesetzt werden:

Kupfer 16 Gew.-%, Cer 0,1 Gew.-%, Gallium 0,1 Gew.-%, Magnesium 15 Gew.-% und zusätzlich Aluminium oder Kupfer 9,6 Gew.-%, Cer 0,1 Gew.-%, Gallium 0,1 Gew.-%, Magnesium 21 Gew.-% und zusätzlich Aluminium oder Kupfer 22,4 Gew.-%, Cer 0,1 Gew.-%, Gallium 0,1 Gew.-%, Magnesium 9 Gew.-% und zusätzlich Aluminium. Diese Beispiele betreffen Löttemperaturen zwischen 460°C und 500°C.

Bei einer Löttemperatur von etwa 450°C kann ein Lot mit der Zusammensetzung 6 Gew.-% Silber, 7 Gew.-% Antimon, 1 Gew.-% Kupfer, 0,1 Gew.-% Cer, 0,1 Gew.-% Gallium, 9 Gew.-% Aluminium und zusätzlich Zink verwendet werden.

Bei einer Löttemperatur von etwa 500°C kann das Lot aus 30 Gew.-% Kupfer, 1 Gew.-% Nickel, 1,2 Gew.-% Cer, 0,1 Gew.-% Gallium, 10 Gew.-% Aluminium und zusätzlich Magnesium zum Einsatz kommen.

### Beispiele 9, 10, 11

Zum Verbinden von Metallen mit nicht-metallischen Komponenten, wie Keramik oder Glas, können Lote eingesetzt werden, wie beispielsweise 3 Gew.-% Silber, 1 Gew.-% Kupfer, 0,3 Gew.-% Titan, 4 Gew.-% Cer, 0,1 Gew.-% Gallium, Rest Zinn oder 2 Gew.-% Silber, 3,2 Gew.-% Cer, 4 Gew.-% Zink, Rest Zinn oder 4 Gew.-% Silber, 0,5 Gew.-% Kupfer, 2 Gew.-% Antimon, 0,3 Gew.-% Nickel, 0,3 Gew.-% Titan, 0,1 Gew.-% Cer, 0,1 Gew.-% Gallium, Rest Zinn. Bei diesen Beispielen liegt die Löttemperatur bei 250°C.

Die Lotlegierungen gemäß den Beispielen und auch sämtliche anderen erfindungsgemäßen Lotlegierungen können bei einer sauerstoffhaltigen Atmosphäre eingesetzt werden. An einer sauerstoffhaltigen Atmosphäre muß jedoch Sorge getragen werden, daß die Oxidschicht, die sich um die Schmelze der Lotlegierung herum bildet, aufgerissen oder ihre Bildung vermieden wird. Beispielsweise können bei der Verarbeitung der Lotlegierungen konventionelle Flußmittel, wie Flußmittel auf der Basis von Kolophonium, eingesetzt werden. Bevorzugt erfolgt jedoch ein Aufbrechen der Oxidschicht der Schmelze durch mechanische Einwirkungen. Die nachfolgend erläuterten Vorrichtungen zum Applizieren von Lotmaterial auf Bauteile oder zum Fügen von zwei Bauteilen umfassen Einrichtungen zum mechanischen Aufbrechen der Oxidschicht.

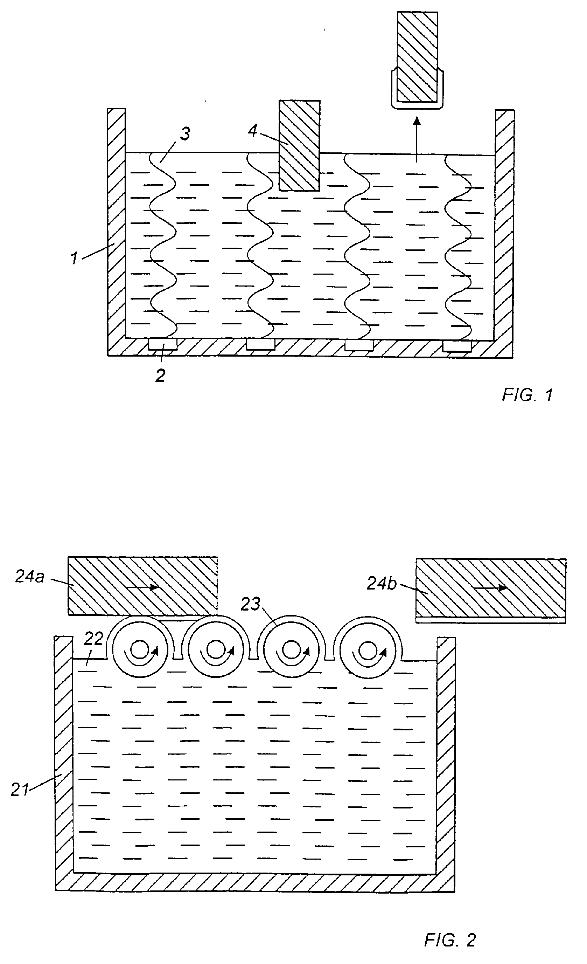

Figur 1 zeigt einen Behälter 1 zur Aufnahme von flüssigem Lot 3. In das flüssige Lot 3 werden mittels am Boden des Behälters 1 angeordneten Ultraschallquellen Ultraschallwellen eingeleitet. Ein vorzubelotendes Bauteil 4 kann dann in das Lot 3 eingetaucht werden, und zwar mit ihrer Fügefläche. Das Bauteil wird benetzt, wenn es die Arbeitstemperatur erreicht hat. Nach Benetzen des Bauteils 4 im Lot 3 kann das Bauteil der Schmelze des Lotes 3 wieder entnommen werden. Das Bauteil 4 wird in dieser Weise mit einem Lotdepot an der Fügefläche versehen, das für ein späteres Fügen des Bauteils mit anderen Bauteilen erforderlich ist.

Auch die in Figur 2 dargestellte Vorrichtung dient zum Vorbeloten von Bauteilen. Die Schmelze eines Lotes 22 wird in einem Behälter 21 aufgenommen. Der Behälter 21 ist an seiner oberen Seite offen. Bei dem Beispiel von Figur 2 sind insgesamt vier Bürsten 23 vorgesehen, deren jeweilige Drehachse im Bereich der offenen Seite des Behälters 21 derart angeordnet ist, daß ein Teil des Bürstenquerschnitts unterhalb der Füllhöhe des Behälters 21 angeordnet ist und ein anderer Teil des Bürstenquerschnitts aus der offenen Seite des Behälters hinausragt. Jede der Bürsten 23 ist mit einem Drehantrieb (nicht dargestellt) verbunden. Eine Transportvorrichtung (nicht dargestellt) bewirkt, daß Bauteile 24a, 24b an dem aus der offenen Seite des Behälters 21 herausragenden Teil des Bürstenquerschnitts unter Kontakt mit den Bürsten 23 vorbeigeführt wird. Die Bauteile 24a und 24b werden, da die Bürsten 23 auf einer übereinstimmenden Höhe im Bezug auf den Behälter 21 angeordnet sind von der Transportvorrichtung so geführt, daß sie sich senkrecht zu den Drehachsen der Bürsten 23 nacheinander über sämtliche Bürsten 23 bewegen. Die Bürsten 23 bewirken, daß flüssiges Lot aus der Schmelze 22 auf die Bauteile aufgebracht wird und daß die Oxidschicht aufgrund des Reibkontaktes der Bürsten mit einer Seite der Bauteile 24a, 24b aufgebrochen wird. Ein für das Aufbrechen der Oxidschicht zufriedenstellender Reibkontakt zwischen den Bürsten 23 und den Bauteilen 24a, 24b ergibt sich, besonders vorteilhaft, wenn die Bauteile 24a, 24b und die Bürsten 23 sich im gegenseitigen Berührungsbereich gegenläufig bewegen. Bei dem Beispiel von Figur 2 drehen sich die Bürsten in Bezug auf die Zeichnungsebene entgegen dem Uhrzeigersinn, während die Bauteile 24a, 24b von links nach rechts geführt werden.

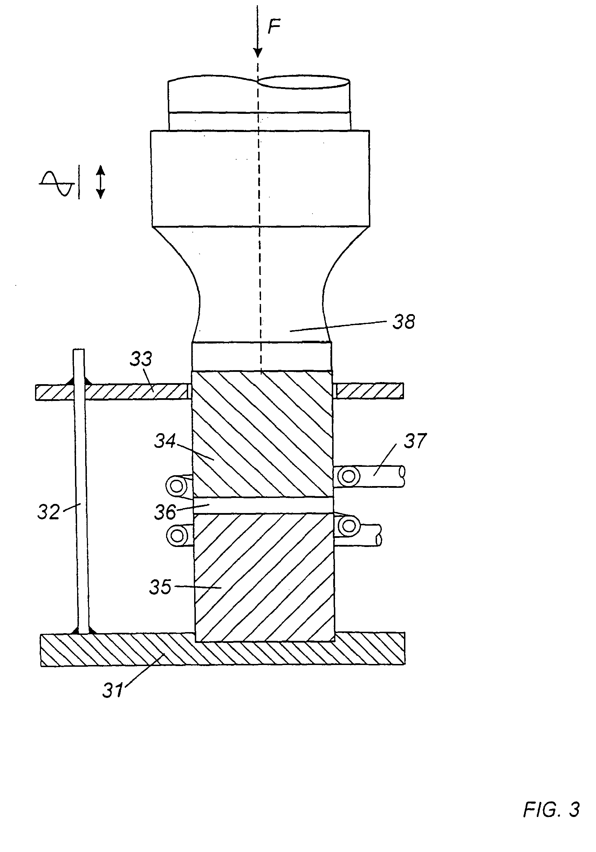

Figur 3 zeigt eine Vorrichtung zum Fügen von zwei Bauteilen. Ein erstes Aufnahmeelement 31 hält ein erstes Bauteil 35, während ein zweites Aufnahmeelement 33 ein zweites Bauteil 34 hält. Zur Einstellung eines Abstands zwischen den Aufnahmeelementen 31, 33 ist ein Abstandshalter 32 vorgesehen. Er gestattet es, daß die Aufnahmeelemente 31, 33 die Bauteile 35, 34 so halten, daß zwischen den Bauteilen 34, 35 ein Zwischenraum freibleibt, der mit Lot 36 gefüllt werden kann. Zur Erwärmung der dem Zwischenraum zugeordneten Abschnitte der Bauteile 34, 35 ist eine Induktionsheizung vorgesehen. Sie dient zur Erwärmung der Bauteilabschnitte auf die Arbeitstemperatur und zum Verflüssigen des Lotes 36. Während einer Aufheizphase bildet sich eine Oxidhaut um das schmelzflüssige Lot 36. Auf das Bauteil 34 ist eine Sonotrode 38 eines Ultraschallschwingers unter Druck aufgesetzt. Die Ultraschallschwingungen (f = 20 kHz, A = 7 - 20 µm) pflanzen sich durch das Bauteil 34 fort und reißen an den Grenzflächen des Bauteils/Lot die Oxidhäute auf. Die Oxidpartikel dispergieren fein in der Lotnaht bzw. werden teilweise aus dem Lotbereich verdrängt. Die verlöteten Bauteile kühlen unter Druck ab.

Die in Figur 3 dargestellten Bauteile 34, 35 weisen im Bereich des Lotes 36 ebene Flächen auf. Die Sonotrode 38 ist derart ausgerichtet, daß ihre Amplitude im wesentlichen senkrecht zu den ebenen Flächen der Bauteile 34, 35 im Bereich des Lotes 36 schwingt. Diese Schwingungsrichtung hat den Vorteil, daß auch dicke Bauteile verlötet werden können.

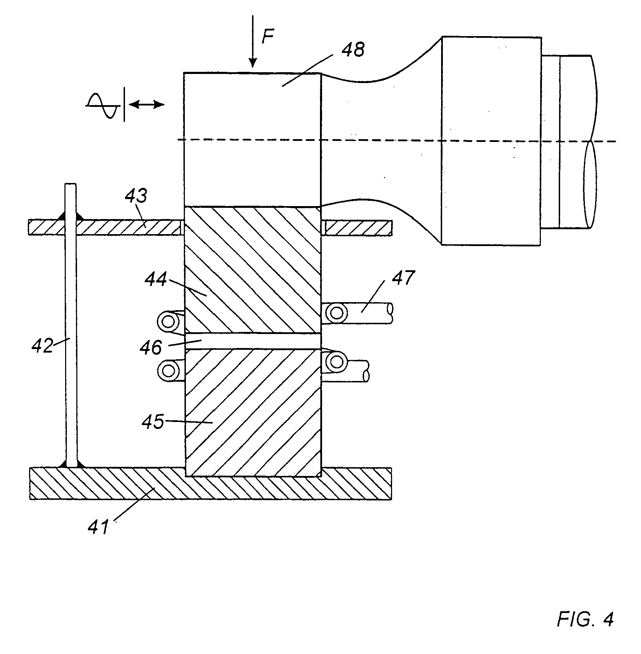

Die in Figur 4 dargestellte Vorrichtung unterscheidet sich von der in Figur 3 dargestellten durch eine Modifizierung einer als Ultraschallquelle vorgesehenen Sonotrode insofern, daß die Bewegungsrichtung der Sonotrode relativ zu den Bauteilen geändert ist. Die in Figur 4 mit den Bezugsziffern 41 bis 47 bezeichneten Elemente entsprechen jeweils den in Figur 3 mit den Bezugsziffern 31 bis 37 bezeichneten Elementen. Die in Figur 4 dargestellte Sonotrode 48 ist derart angeordnet, daß die Schwingungsamplitude der Ultraschallwellen parallel zu den ebenen Flächen der Bauteile 44, 45 schwingt. Diese Schwingungsrichtung hat Vorteile, wenn bruchempfindliche Werkstoffe wie Keramik oder Glas als Material für die zu verlötenden Bauteile vorliegen.

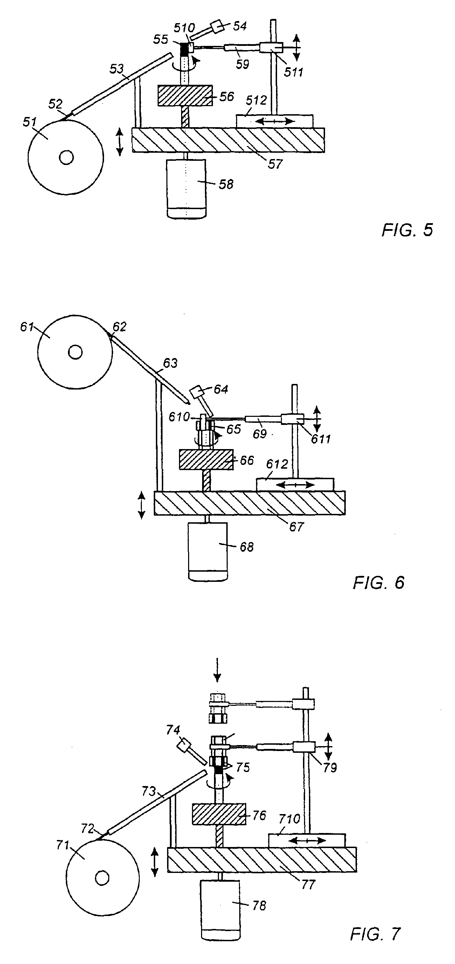

Fig. 5 zeigt eine Vorrichtung zum Applizieren eines in Drahtform vorliegenden oxidierbaren Lotlegierungsmaterials auf wenigstens einen Teil der Oberfläche eines rohrförmigen Bauteils 55 in einer sauerstoffhaltigen Atmosphäre.

Die Vorrichtung weist eine um eine Achse drehbare Aufnahme 57 für das auf der Achse anzuordnende Bauteil 56a auf. Die Aufnahme 57 ist in einer Grundplatte 58 drehbar gelagert und wird mittels eines Elektromotors 59 angetrieben. Die Vorrichtung weist außerdem eine parallel zu der Achse der Aufnahme 57 höhenverstellbare Zuführvorrichtung für das drahtförmige Lotlegierungsmaterial 52 auf. Die Zuführvorrichtung umfaßt eine angetriebene Drahthaspel 51 und ein rohrförmiges Zuführelement 53. Das Zuführelement 53 ist derart angeordnet, daß das drahtförmige Lotlegierungsmaterial zu der Randaußenfläche des rohrförmigen Bauteils 55 geführt wird. Das Zuführelement 53 ist über einen längeneinstellbaren Arm, der parallel zu der Achse der Aufnahme 57 verläuft, an der Grundplatte 58 befestigt. Das Lot wird von der Drahthaspel 51, die über einen E-Motor angetrieben wird, durch das Zuführelement 53 auf die Mantelfläche des Bauteils geführt. Die gleichzeitige Erwärmung des Bauteils 55 durch eine Heizvorrichtung 54, wie ein Heißluftfön, bewirkt, daß das Lot an der Kontaktstelle verflüssigt und durch die Rotation des Bauteils auf dem gesamten Umfang des Bauteils abschmilzt. Die Höhe der Vorbelotung kann durch die höhenverstellbare Zuführvorrichtung 53 eingestellt werden. Ein Verfahren des Zuführelementes 53 parallel zu dem rohrförmigen Bauelement 55 vom oberen Rand des rohrförmigen Bauteils 55 aus in Richtung der Aufnahme 57 bewirkt eine Vorbelotung der Randaußenfläche. Zum Aufbrechen der Oxidschicht dient eine Druckvorrichtung 510, mit der ein Werkzeug 511 gegen die abgeschmolzene Lotschicht im Bereich der vorzubelotenden Außenfläche des rohrförmigen Bauteils 55 gedrückt wird. Die Druckvorrichtung 510 ist an der Grundplatte 58 mittels einer Haltevorrichtung angebracht, die ein Verbindungsstück 512 aufweist. Das verbindungsstück 512 ist mit der Druckvorrichtung 510 fest verbunden und entlang einer Stange verschieblich, die an der Grundplatte 58 angebracht ist. Die Stange verläuft parallel zu der Achse der Aufnahme 57, wobei sich der Abstand der Stange gegenüber der Aufnahme ändern läßt.

Fig. 6 zeigt eine weitere Vorrichtung zum Applizieren von Lotlegierungsmaterial, und zwar, im Gegensatz zu Fig. 5, auf der Randinnenseite eines rohrförmigen Bauteils 65. Die in Fig. 6 dargestellte Vorrichtung weist eine Wickelspule 61 für drahtförmiges Lotlegierungsmaterial 62, ein Zuführelement 63, eine Grundplatte 68, ein Verbindungsstück 612, einen Elektromotor 69 und eine Aufnahme 67 auf, die in ihrer Funktionsweise den anhand von Fig. 5 erläuterten, gleichnamigen Bauteilen entsprechen. Es ist eine Druckvorrichtung 610 vorgesehen, die ein Werkzeug 611 gegen die Randinnenseite des rohrförmigen Bauteils 65 drückt, um eine auftretende Oxidhaut der Schmelze der Lotlegierung aufzubrechen. Zur Bereitstellung der erforderlichen Wärme ist eine Heizeinrichtung 64 vorgesehen.

Fig. 7 entspricht in wesentlichen Teilen der Fig. 5, wobei insbesondere die Bauelemente 51 - 512 von Fig. 5 jeweils den Bauelementen 71 - 712 der Fig. 7 in ihrer Funktionsweise entsprechen. Die zu verbindenden rohrförmigen Bauelemente können beispielsweise mit Vorrichtungen gemäß der Fig. 5 und der Fig. 6 an einer Randaußenfläche bzw. ihrer Randinnenfläche vorbelotet sein. Die in Fig. 7 dargestellte Zuführvorrichtung ist zum Fügen der rohrförmigen Bauelemente nicht erforderlich. Bei der Vorrichtung gemäß Fig. 7 kann ein Werkzeug zum Aufbrechen der Oxidhaut entfallen, da eines der rohrförmigen Bauelemente, nämlich das Bauelement 75, um die Achse der Aufnahme 77 rotiert, während das zweite Bauelement drehfest ist und vertikal nach unten geführt wird, so daß die beiden vorbeloteten Bauteilflächen zur Deckung kommen. Aufgrund dessen ergibt sich beim Übereinanderschieben der zu verbindenden rohrförmigen Bauelemente eine Reibungskraft, die zum Aufbrechen der Oxidhaut der Schmelze der Lotlegierung auf den vorbeloteten Bauteilen ausgenutzt werden kann.

Für diesen Vorgang werden die zu verbindenden Bauteile im Bereich der Fügestelle erwärmt.

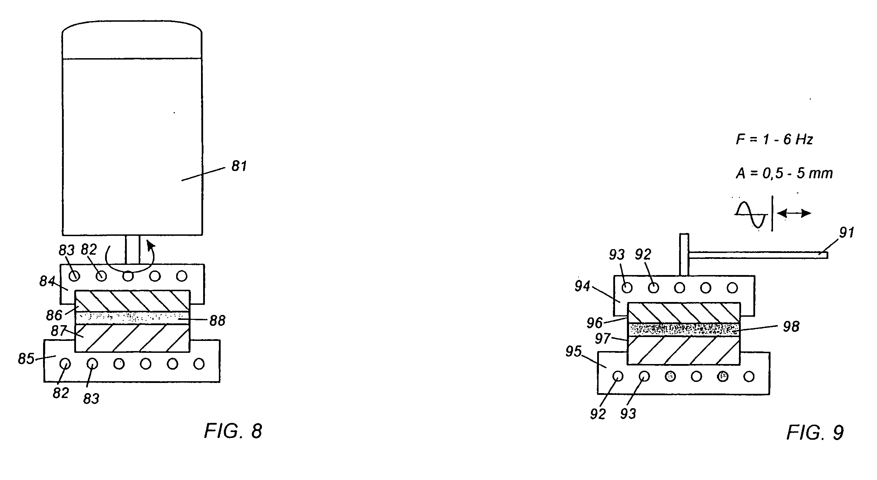

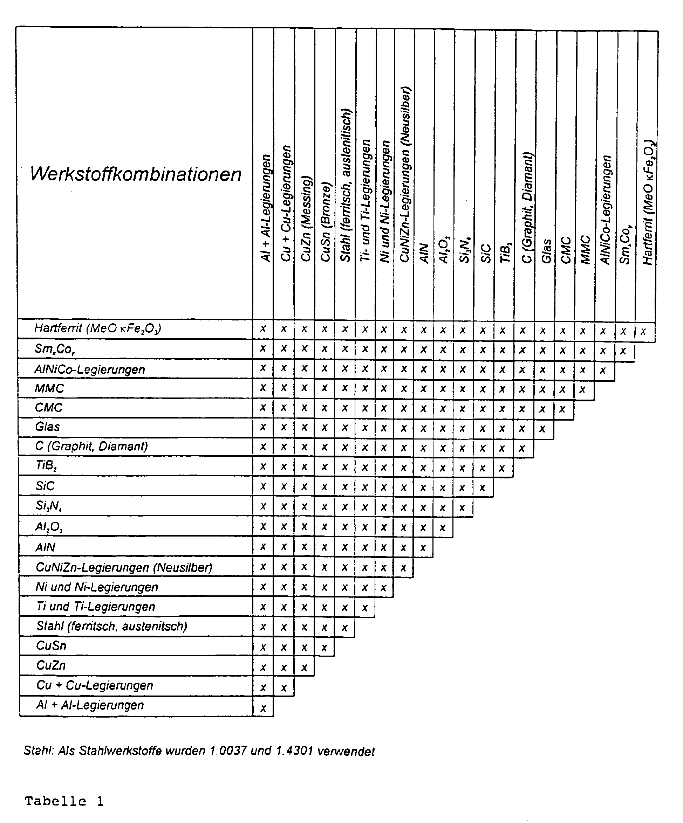

Fig. 8 zeigt eine Vorrichtung zum Fügen von zwei zylindersymmetrischen Bauteilen 86, 87 aus Vollmaterial, die in Aufnahmen 84 bzw. 85 gehalten sind. In einem Zwischenraum zwischen den Bauteilen 86, 87 ist Lotlegierungsmaterial 88 angeordnet. Beide Aufnahmen 84, 85 weisen Öffnungen 82 zum Einführen von Heizpatronen und Kühlkanäle 83 zur Kühlung der Vorrichtung und der Bauteile nach dem Lötvorgang auf. Die Aufnahme 84 ist über eine Welle mit einem Elektromotor 81 verbunden, während die Aufnahme 85 fest steht. Eine relative Drehung des Bauteils 86 gegenüber dem feststehenden Bauteil 87 bewirkt, daß die Oxidhaut der Schmelze des Lotmaterials 88 aufgebrochen wird. Die Drehzahl für die Aufnahme 84 wird in Abhängigkeit des Bauteilgewichts eingestellt und liegt bevorzugt zwischen 5 und 1000 U/min. Die Rotationszeit liegt für das sich drehende Bauteil zwischen 1 und 30 sek. Die Aufnahme 84 ist mit Druck beaufschlagt, der in Richtung der Aufnahme 85 wirkt.

In Fig. 9 ist eine Vorrichtung zum Fügen von zwei rechtwinkligen Bauteilen dargestellt, mit zwei Aufnahmen 94, 95 für Bauteile 96, 97, Öffnungen für Heizpatronen 92 und Kühlkanäle 93 und Lotlegierungsmaterial 98.

Eine Schwingungseinrichtung 91 bewirkt eine Parallelverschiebung der Aufnahme 94 relativ zu der feststehenden Aufnahme 95, so daß eine erforderliche Reibungskraft zum Aufbrechen der Oxidschicht der Schmelze der Lotlegierung 98 bereitgestellt wird. Die Frequenz der Schwingungseinrichtung liegt zwischen 2 und 6 Hz während die Amplitude zwischen 0,5 und 5 mm liegt. Die Aufnahme 94 ist mit Druck beaufschlagt.

## Patentansprüche

1. Lotlegierung, bestehend aus
- einem Element oder einem Gemisch aus Elementen, ausgewählt aus der Gruppe, die Kupfer, Silber und Antimon umfaßt, in einer Gesamtmenge von 0,1 bis 40 Gew.-% als erste Komponente,
- einem Element oder einem Gemisch aus Elementen, ausgewählt aus der Gruppe, die die seltenen Erden umfaßt, in einer Gesamtmenge von 0,01 bis 20 Gew.-% als zweite Komponente,
- dem Element Gallium in einer Gesamtmenge von 0,05 bis 10 Gew.-% als dritte Komponente,
- einem Element oder einem Gemisch aus Elementen, ausgewählt aus der Gruppe, die Eisen, Nickel, Kobalt, Mangan und Chrom umfaßt, in einer Gesamtmenge von o bis 5 Gew.-% als vierte Komponente,
- einem Element oder einem Gemisch aus Elementen, ausgewählt aus der Gruppe, die Titan, Zirkon, Hafnium, Vanadium, Niob und Tantal umfaßt, in einer Gesamtmenge von 0 bis 0,9 Gew.-% als fünfte Komponente,
- einer Verstärkungs-Komponente, ausgewählt aus der Gruppe, die Aluminiumoxid, Aluminiumnitrid, Siliziumnitrid, Siliziumkarbid, Titankarbid und Graphit umfaßt, in einer Gesamtmenge von o bis 40 Vol.-% als sechste Komponente,
- einem Element oder einem Gemisch aus Elementen, ausgewählt aus der Gruppe, die Aluminium, Magnesium und Zink umfaßt, als Rest und
- üblichen Verunreinigungen.

2. Lotlegierung nach Anspruch 1, bei der
- die erste Komponente in Form von 15 bis 25 Gew.-% Kupfer,
- die zweite Komponente in Form von 0,05 bis 0,15 Gew.-% Cer,
- die dritte Komponente in Form von 0,05 bis 0,15 Gew.-% Gallium, und
- der Rest in Form von Magnesium, Aluminium oder eines Gemisches aus Magnesium und Aluminium vorliegt.

3. Lotlegierung nach Anspruch 1, bei der
- die erste Komponente in Form von 5 bis 7 Gew.-% Silber, 0 bis 7 Gew.-% Antimon und 1 bis 7 Gew.-% Kupfer,
- die zweite Komponente in Form von 0,05 bis 0,15 Gew.-% Cer,
- die dritte Komponente in Form von 0,05 bis 0,15 Gew.-% Gallium, und
- der Rest in Form von Aluminium, Zink oder eines Gemisches aus Aluminium und Zink vorliegt.

4. Lotlegierung nach Anspruch 1, bei der
- die erste Komponente in Form von 25 bis 35 Gew.-% Kupfer,
- die zweite Komponente in Form von 0,8 bis 1,6 Gew.-% Cer,
- die dritte Komponente in Form von 0,05 bis 0,15 Gew.-% Gallium, und
- der Rest in Form von Aluminium, Magnesium oder eines Gemisches aus Aluminium und Magnesium vorliegt.

5. Lotlegierung nach Anspruch 1, bei der
- die erste Komponente in Form von o bis 1,5 Gew.-% Kupfer, 1,5 bis 4,5 Gew.-% Silber und o bis 2,5 Gew.-% Antimon,
- die zweite Komponente in Form von 0,05 bis 4,5 Gew.-% Cer,
- die dritte Komponente in Form von o,05 bis 0,15 Gew.-% Gallium,
- die fünfte Komponente in Form von o bis 0,5 Gew.-% Nickel und o bis 0,5 Gew.-% Titan, und
- der Rest in Form von Zink vorliegt.

6. Lotlegierung nach Anspruch 1, bei der das (die) chemische(n) Element(e) des Restes in einem Anteil von mindestens 50 Gew.-% vorliegt (vorliegen).

7. Lotlegierung nach einem der Ansprüche 1 bis 6 bei der die Verstärkungskomponente in einem Anteil von 1 bis 30 Vol.-% vorliegt.

## Claims

1. A soldering alloy, comprising
- an element or a mixture of elements, selected from the group comprising copper, silver and antimony, in an overall amount of 0.1 to 40 weight percent as a first component,
- an element or a mixture of elements, selected from the group comprising rare earths, in an overall amount of 0.01 to 20 weight percent, as a second component,
- the element gallium in an overall amount of 0.05 to 10 weight percent as a third component,
- an element or a mixture of elements, selected from the group comprising iron, nickel, cobalt, manganese and chromium, in an overall amount of 0 to 5 weight percent as a fourth component,
- an element or a mixture of elements, selected from the group comprising titanium, zirconium, hafnium, vanadium, niobium and tantalum, in an overall amount of 0 to 0.9 weight percent as a fifth component,
- a reinforcing component selected from the group comprising aluminium oxide, aluminium nitride, silicon nitride, silicon carbide, titanium carbide and graphite, in an overall amount of 0 to 40 volume percent, as a sixth component,
- an element or a mixture of elements, selected from the group comprising aluminium, manganese and zinc, as the balance, and
- the usual impurities.

2. The soldering alloy according to claim 1, wherein
- the first component is in the form of 15 to 25 weight percent copper,
- the second component is in the form of 0.05 to 0.15 weight percent cerium,
- the third component is in the form of 0.05 to 0.15 weight percent gallium, and
- the balance is in the form of magnesium, aluminium or a mixture of magnesium and aluminium.

3. The soldering alloy according to claim 1, wherein
- the first component is in the form of 5 to 7 weight percent silver, 0 to 7 weight percent antimony and 1 to 7 weight percent copper,
- the second component is in the form of 0.05 to 0.15 weight percent cerium,
- the third component is in the form of 0.05 to 0.15 weight percent gallium, and
- the balance is in the form of aluminium, zinc or a mixture of aluminium and zinc.

4. The soldering alloy according to claim 1, wherein
- the first component is in the form of 25 to 35 weight percent copper,
- the second component is in the form of 0.8 to 1.6 weight percent cerium,
- the third component is in the form of 0.05 to 0.15 weight percent gallium, and
- the balance is in the form of aluminium, magnesium or a mixture of aluminium and magnesium.

5. The soldering alloy according to claim 1, wherein
- the first component is in the form of 0 to 1.5 weight percent copper, 1.5 to 4.5 weight percent silver and 0 to 2.5 weight percent antimony,
- the second component is in the form of 0.05 to 4.5 weight percent cerium,
- the third component is in the form of 0.05 to 0.15 weight percent gallium,
- the fifth component is in the form of 0 to 0.5 weight percent nickel and 0 to 0.5 weight percent titanium, and
- the balance is in the form of zinc.

6. The soldering alloy according to claim 1, wherein the chemical element(s) of the balance is (are) present in a proportion of at least 50 weight percent.

7. The soldering alloy according to any one of claims 1 to 6, wherein the reinforcing component is present in a proportion of 1 to 30 volume percent.

## Revendications

1. Alliage à souder constitué par
- un élément ou un mélange d'éléments, choisis dans le groupe qui comprend le cuivre, l'argent et l'antimoine, dans une quantité totale de 0,1 à 40% en poids comme premier composant,
- un élément ou un mélange d'éléments, choisis dans le groupe qui comprend les terres rares, dans une quantité totale de 0,01 à 20 % en poids comme second composant,
- l'élément gallium dans une quantité totale de 0,05 à 10 % en poids comme troisième composant,
- un élément ou un mélange d'éléments, choisis dans le groupe qui comprend le fer, le nickel, le cobalt, le manganèse et le chrome, dans une quantité totale de 0 à 5 % en poids comme quatrième composant,
- un élément ou un mélange d'éléments, choisis dans le groupe qui comprend le titane, le zirconium, le hafnium, le vanadium, le niobium et le tantale, dans une quantité totale de 0 à 0,9 % en poids comme cinquième composant,
- un composant de renforcement, choisi dans le groupe qui comprend l'oxyde d'aluminium, le nitrure de silicium, le carbure de silicium, le carbure de titane et le graphite, dans une quantité totale de 0 à 40 % en volume comme sixième composant,
- un élément ou un mélange d'éléments choisis dans le groupe qui comprend l'aluminium, le magnésium et le zinc comme reste et
- les impuretés habituelles.

2. Alliage à souder selon la revendication 1 pour lequel
- le premier composant existe sous forme de 15 à 25 % en poids de cuivre,
- le second composant existe sous forme de 0,05 à 0,15 % en poids de Cer,
- le troisième composant existe sous forme de 0,05 à 0,15 % en poids de gallium et
- le reste existe sous forme de magnésium, d'aluminium ou d'un mélange de magnésium et d'aluminium.

3. Alliage à souder selon la revendication 1 pour lequel
- le premier composant existe sous forme de 5 à 7 % en poids d'argent, de 0 à 7 % en poids d'antimoine et d'1 à 7 % en poids de cuivre,
- le second composant existe sous forme de 0,05 à 0,15 % en poids de Cer,
- le troisième composant existe sous forme de 0,05 à 0,15 % en poids de gallium et
- le reste existe sous forme d'aluminium, de zinc ou d'un mélange d'aluminium et de zinc.

4. Alliage à souder selon la revendication 1 pour lequel
- le premier composant existe sous forme de 25 à 35 % en poids de cuivre,
- le second composant existe sous forme de 0,8 à 1,6 % en poids de Cer,
- le troisième composant existe sous forme de 0,05 à 0,15 % en poids de gallium et
- le reste existe sous forme d'aluminium, de magnésium ou d'un mélange d'aluminium et de magnésium.

5. Alliage à souder selon la revendication 1 pour lequel
- le premier composant existe sous forme de 0 à 1,5 % en poids de cuivre, 1,5 à 4,5 % en poids d'argent et 0 à 2,5 % en poids d'antimoine,
- le second composant existe sous forme de 0,05 à 4,5 % en poids de Cer,
- le troisième composant existe sous forme de 0,05 à 0,15 % en poids de gallium,
- le cinquième composant existe sous forme de 0 à 0,5 % en poids de nickel et 0 à 0,5 % en poids de titane et
- le reste existe sous forme de zinc.

6. Alliage à souder selon la revendication 1 pour lequel le (les) élément(s) chimique(s) du reste existe(nt) dans une proportion d'au moins 50 % en poids.

7. Alliage à souder selon l'une des revendications 1 à 6 pour lequel le composant de renforcement existe dans une proportion d'1 à 30 % en volume.
